# EUROPEAN PATENT SPECIFICATION

(11) **EP 2 224 657 B1**
(45) Date of publication and mention of the grant of the patent: **30.07.2014**
(21) Application number: 09154064.1
(22) Date of filing: 27.02.2009
(51) Int. Cl.: H04L 25/02, H04L 27/00

(54) **Method and system for automatic frequency control optimization**
Verfahren und System zur Optimierung der automatischen Trägerregulierung
Procédé et système pour l'optimisation du contrôle automatique de fréquence

(43) Date of publication of application: 01.09.2010
(73) Proprietor: BlackBerry Limited, Waterloo, ON N2K 0A7 (CA)
(72) Inventor: Raza, Zahir, Waterloo Ontario N2L 5Z5 (CA); Tran, Phat, Waterloo Ontario N2L 3W8 (CA)
(74) Representative: Moore, Barry

(56) References cited:
- EP-A- 1 028 562
- EP-A- 1 160 981
- US-A1- 2006 098 716
- XUEQI XU ET AL: "Automatic frequency control: Theory and simulation" IEEE INTERNATIONAL CONFERENCE ON AUTOMATION AND LOGISTICS, 2008, 1 September 2008 (2008-09-01), pages 1785-1789, XP031329938 NJ, USA ISBN: 978-1-4244-2502-0

## Description

### FIELD OF THE DISCLOSURE

The present disclosure relates to automatic frequency control and in particular to automatic frequency control systems for mobile communications.

### BACKGROUND

In order to accurately demodulate data embedded in radio frequency signals, the received signal needs to be converted to a baseband frequency. In order to do this, the frequency of the transmitter should be matched at the receiver.

In practice, the radio frequency signal received by the receiver is distorted from the signal that was transmitted by the transmitter based on the channel conditions. In order to overcome this, estimations are made of the channel in an attempt to derive a gain and frequency from known data contained in the signal.

In low signal to noise ratio conditions errors in the estimated frequency can lead to undesirable fluctuations in a receiver's frequency control loop. EP 1028562 describes a multicarrier timing recovery system including channel estimation circuitry, tracking circuitry and acquisition circuitry. In the timing recovery system, timing phase is extracted from multiple subchannels using weighted averaging techniques.

### SUMMARY

The present disclosure provides a method as detailed in claim 1. A subsystem as provided in claim 8 is also provided. Advantageous preferred embodiments are provided in the dependent claims.

Further details of said method are provided in dependent claims 2-7.

Dependent claims 9-14 provide further details of said subsystem.

### BRIEF DESCRIPTION OF THE DRAWINGS

The present disclosure will be better understood with reference to the drawings in which:
**Figure 1** is a block diagram of a conventional frequency correction system;
**Figure 2** is a block diagram of a frequency correction system having a weighting function based on channel conditions;
**Figure 3** is a block diagram of a process for determining a weighting function;
**Figure 4** is a flow diagram showing a method for the frequency control system of Figure 2; and
**Figure 5** is a block diagram of an exemplary mobile device that may be used with the method and system of the present disclosure.

### DETAILED DESCRIPTION

When a user equipment is in poor channel conditions, or more specifically when a user equipment is in a low signal-to-noise ratio condition, the use of conventional techniques to improve estimates for the transmitter frequency can degrade, leading to undesirable fluctuations in frequency estimates.

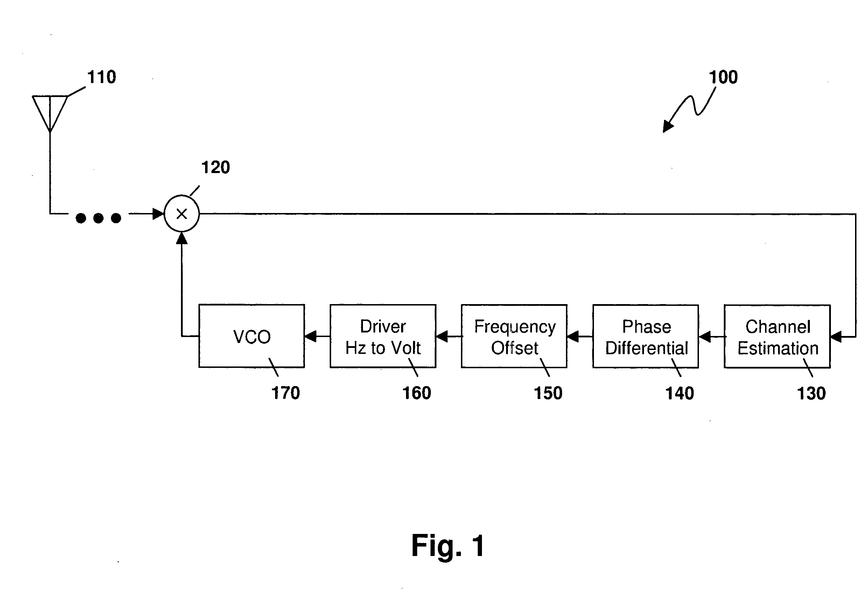

Reference is now made to **Figure 1. Figure 1** shows a conventional frequency control system **100** where a receiver **110** receives a downlink signal.
As will be appreciated, such downlink signal comes from the base station to the user equipment and various coding of the signal is possible. Examples of such coding include the global system for mobile communications (GSM), code divisional multiple access (CDMA), universal mobile telecommunications system (UMTS), wideband code division multiple access (WCDMA), among others.

In the present disclosure, a UMTS system and terminology associate with UMTS is utilized. However, this is not meant to be limiting and the present disclosure could equally applied to various radio technologies.

In the system **100,** the received signal or symbol is converted to a baseband signal at multiplier **120.**

A feedback loop is established where a channel estimation at channel estimation block **130** occurs. As will be appreciated, channel estimation block **130** attempts to derive signal shift from known elements to find changes in both the amplitude and the phase of the received signal from the expected values. Thus, if a constant phase shift is occurring, this is determined at the channel estimation block **130.**

The estimated signal is then provided to a phase differential block **140,** in which an average phase shift is sought. As will be appreciated, under certain channel conditions, the channel causes a stable phase shift in the signal and the phase differential block **140** looks for the average phase shift. Furthermore, different signaling systems can have different methods of frequency estimation that does not require a phase differential block. For example, GSM does not require a phase differential of the channel estimates for frequency estimation.

The output from the phase differential block **140** is provided to a frequency offset block **150.** Frequency offset block **150** transfers the phase differentials to a frequency. The frequency is then fed to a converter, which converts the frequency to a voltage as seen by block **160.** The voltage from block **160** is provided to a voltage controlled oscillator **170** which provides an oscillation that is input to multiplier **120.**

As seen from **Figure 1****,** the conventional frequency control system **100** therefore estimates phase and amplitude adjustments to symbols. The channel estimate factors from block **130** are then used to extract the average phase difference over a set of received symbols at block **140,** from which a frequency offset between the received signal and the current oscillator setting is derived at block **150.** This frequency offset is converted to volts from hertz at block **160** and applied to a voltage controlled oscillator **170** to adapt the down converter. In other words, the down converter requires multiplication by the central frequency plus the frequency offset derived in block **150.**

The conventional frequency control system **100** therefore does not take into account the reliability of channel estimates from the channel estimation block **130.** The channel estimates derived at channel estimation block **130** degrade in terms of their reliability as the signal to noise ratio is reduced. To introduce a factor of reliability, the present disclosure provides for a weighting function that is applied to each frequency offset based on the quality of channel estimates from which the frequency offset is derived.

In the present disclosure, the weighting function is a system configurable function with parameters that are adjusted to the application, allowing the present disclosure to be used for various purposes.

In particular, the weighting function is a function of the signal to noise ratio of the channel estimates. A low signal to noise ratio in a multipath or noisy environment can lead to the receiver to fail to converge to the true frequency of the signal.

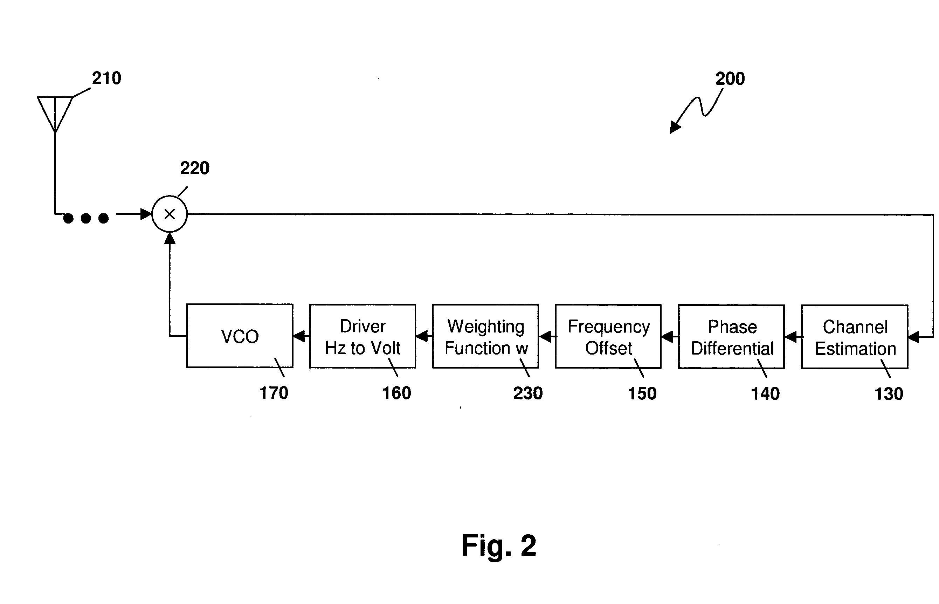

Reference is now made to **Figure 2****.**

The frequency control system **200** of **Figure 2** provides a down converter **220** to down convert a received signal from receiver **210.** The down converter **220** further has a feedback function which has an input based on channel estimations, as in **Figure 1****.**

In particular, a channel estimation block **130,** phase differential block **140,** frequency offset block **150,** converter block **160** and voltage controlled oscillator **170** are provided and provide similar functionality to those blocks in **Figure 1****.**

A weighting function block **230** is however added. The weighting function block **230,** in one embodiment, provides a indication of the reliability of the channel estimation derived in block **130,** thereby providing more accurate feedback to voltage controlled oscillator **170.**

As will be appreciated, when a high signal-to-noise ratio exists, the quality of the received signal is high, providing for more accurate channel estimation at channel estimation block **130.** When the signal-to-noise ratio is however low, the estimates derived by channel estimation block **130** can be corrupted and therefore need to be weighted with appropriate reliability.

In one embodiment, a linear weighting function is possible. One exemplary weighting function is as follows:

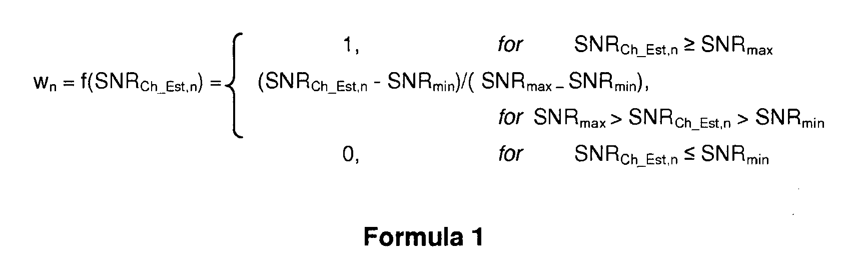

From the above, the weight w for a particular frequency offset estimate is a function of the signal-to-noise ratio of the received signal from which the frequency error was estimated. The function is linear and if the signal-to-noise ratio for the channel estimate is greater then a maximum predefined signal-to-noise ratio then the channel is considered reliable and the weighting function is set to one. In one embodiment the maximum signal to noise ratio is the minimum signal to noise ratio plus a predetermined offset value.

Conversely, if the signal-to-noise ratio for the channel estimate is between the minimum signal-to-noise ratio and the maximum signal-to-noise ratio, then a function can be derived. In the example of Formula 1 above, the weighting function is the signal-to-noise ratio for the channel estimate minus the minimum signal-to-noise ratio, all divided by the difference between the maximum signal-to-noise ratio and the minimum signal-to-noise ratio.

Finally, if the signal-to-noise ratio of the channel estimate is below a minimum signal-to-noise ratio then the weighting function can designate a zero for the sample or symbol.

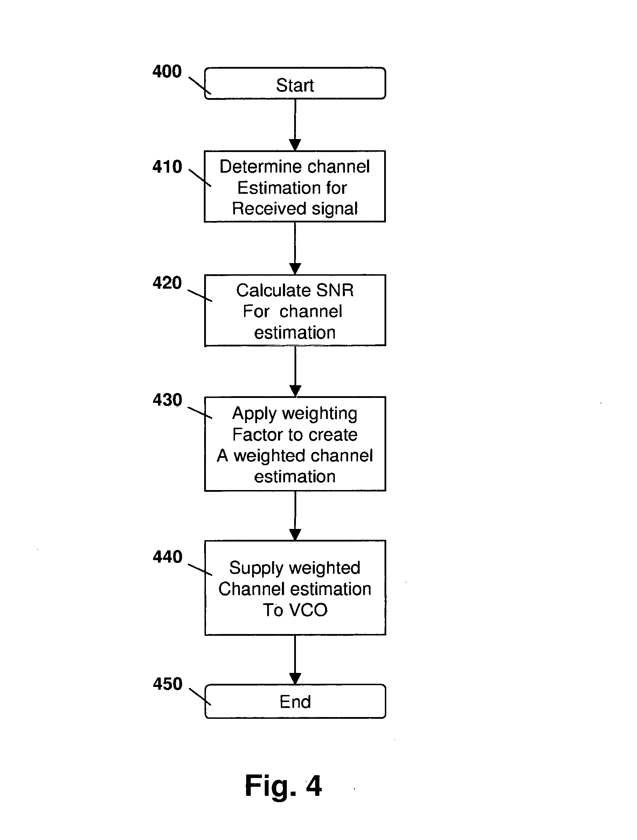

The above is summarized with regard to **Figure 4****.** In particular, **Figure 4** illustrates a flow diagram for the steps illustrated by the block diagram of Figure **2****.**

The process in **Figure 4** starts at block **400** and proceeds to block **410** in which a channel estimation is determined for a received signal.

The process then proceeds to block **420** in which a signal to noise ratio is calculated for the channel estimation.

A weighting function is then applied in block **430** to the calculated signal to noise ratio to create a weighted channel estimation.

The process then proceeds to block **440** in which the weighted channel estimation is supplied to a voltage controlled oscillator which then provides the feedback as illustrated in **Figure 2****.**

The process then proceeds to block **450** and ends.

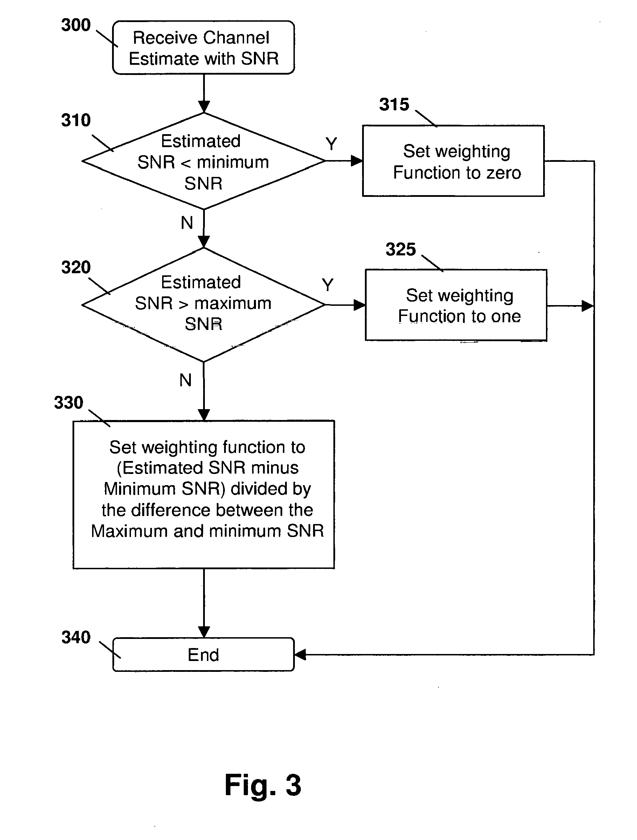

A method for implementing Formula 1 on a mobile device is illustrated with reference to **Figure 3****.** In **Figure 3** a precondition is that a channel estimate with an estimated signal to noise ratio is received at block **300.**

The process then proceeds to block **310** in which a check is made to determine whether the estimated signal to noise ratio is below a minimum signal to noise ratio threshold. The minimum signal to noise ratio threshold is represented as SNRₘᵢₙ in Formula 1 above.

If yes, the process proceeds to block **315** in which the weighting function is set to zero. As will be appreciated, this indicates to subsequent processing elements that the channel estimate should be ignored for frequency correction purposes.

Conversely, if it is found in block **310** that the estimated signal to noise ratio is greater than the minimum signal to noise ratio threshold, the process proceeds to block **320.** In block **320** a check is made to determine whether the estimated signal to noise ratio is greater than the maximum signal to noise ratio.

If the estimated signal to noise ratio is greater than the maximum signal to noise, then the estimate is determined to be reliable and the process proceeds to block **325** in which the weighting function is set to one.

If it is determined in block **320** that the estimated signal to noise ratio is not greater than the maximum signal to noise ratio, the combination of blocks **310** and **320** indicate that the estimated signal to noise ratio is between the minimum signal to noise ratio and the maximum signal to noise ratio. In this case the process proceeds to block **330** in which the linear function as described in Formula 1 above is applied to the weighting function. Specifically, utilizing Formula 1 above, the minimum signal to noise ratio is subtracted from the estimated signal to noise ratio, and the result is divided by the difference between the maximum signal to noise ratio and minimum signal to noise ratio.

From blocks **315, 325** or **330** the process proceeds to block **340** and ends.

The weighting function, as illustrated by Formula 1 and **Figure 3** above, is merely meant to be exemplary of a type of weighting function that can be added to an automatic frequency control system. In alternate embodiments, other linear or non-linear functions could be utilized to weight the channel estimate.

The above therefore takes into account the minimum operating range of a channel estimation unit, which is the source of the derived frequency offsets or corrections. In this way, any deviation introduced by the channel estimation unit when below an operating signal-to-noise ratio implies a deviation to the derived frequency correction and could lead to loss of signal on a wireless handheld or loss of performance or reception in areas where the signal-to-noise ratio is at or below the maximum signal-to-noise ratio as described above.

As will be appreciated, the signal-to-noise ratio is provided above. However, in other technologies, the Energy per Chip (Eclo) is utilized instead of signal-to-noise ratio, but similar functionality can be provided utilizing a weight function **230.** Other measures of channel quality such as, but not limited to, bit error rates equally be used. All of the measures of channel quality are generally referred to herein as "Signal to Noise Ratio" or "SNR", and the present disclosure is not limited to a particular measure of channel quality.

The use of the weighting function improves the performance of the mobile receiver in areas where the signal-to-noise ratio is low, such as cell boundary regions, particularly during handover from third generation (3G) cells to second generation cells, among others.

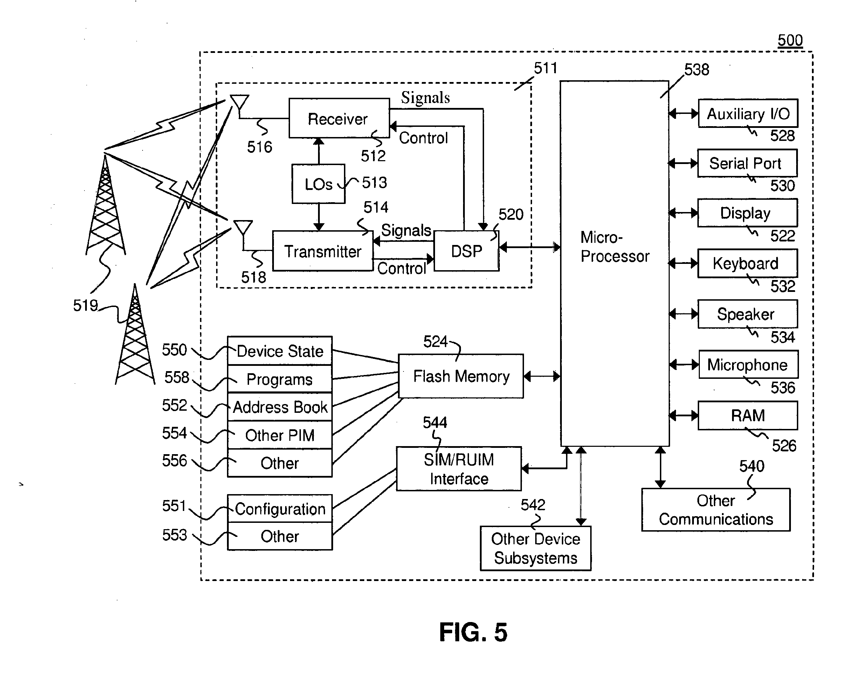

The present system and methods could be utilized with a variety of mobile devices. One exemplary mobile device is described below with reference to **Figure 5****.** This is not meant to be limiting, but is provided for illustrative purposes.

**Figure 5** is a block diagram illustrating a mobile device capable of being used with preferred embodiments of the apparatus and method of the present application. Mobile device **500** is preferably a two-way wireless communication device having at least voice and data communication capabilities. Mobile device **500** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **500** is enabled for two-way communication, it will incorporate a communication subsystem **511,** including both a receiver **512** and a transmitter **514,** as well as associated components such as one or more, preferably embedded or internal, antenna elements **516** and **518,** local oscillators (LOs) **513,** and a processing module such as a digital signal processor (DSP) **520.** As will be apparent to those skilled in the field of communications, the particular design of the communication subsystem **511** will be dependent upon the communication network in which the device is intended to operate.

Network access requirements will also vary depending upon the type of network **519.** In some CDMA networks network access is associated with a subscriber or user of mobile device **500.** A CDMA mobile device may require a removable user identity module (RUIM) or a subscriber identity module (SIM) card in order to operate on a CDMA network. The SIM/RUIM interface **544** is normally similar to a card-slot into which a SIM/RUIM card can be inserted and ejected like a diskette or PCMCIA card. The SIM/RUIM card can have approximately 64K of memory and hold many key configuration **551,** and other information **553** such as identification, and subscriber related information.

When required network registration or activation procedures have been completed, mobile device **500** may send and receive communication signals over the network **519.** As illustrated in **Figure 5****,** network **519** can consist of multiple base devices communicating with the mobile device. For example, in a hybrid CDMA 1 x EVDO system, a CDMA base device and an EVDO base device communicate with the mobile device and the mobile device is connected to both simultaneously. The EVDO and CDMA 1 x base stations use different paging slots to communicate with the mobile device.

Signals received by antenna **516** through communication network **519** are input to receiver **512,** which may perform such common receiver functions as signal amplification, frequency down conversion, filtering, channel selection and the like, and in the example system shown in **Figure 5****,** analog to digital (A/D) conversion. A/D conversion of a received signal allows more complex communication functions such as demodulation and decoding to be performed in the DSP **520.** The communication subsystem could include the feedback loop of **Figure 2** for demodulation.

In a similar manner, signals to be transmitted are processed, including modulation and encoding for example, by DSP **520** and input to transmitter **514** for digital to analog conversion, frequency up conversion, filtering, amplification and transmission over the communication network **519** via antenna **518.** DSP **520** not only processes communication signals, but also provides for receiver and transmitter control. For example, the gains applied to communication signals in receiver **512** and transmitter **514** may be adaptively controlled through automatic gain control algorithms implemented in DSP **520.**

Mobile device **500** preferably includes a microprocessor **538** which controls the overall operation of the device. Communication functions, including at least data and voice communications, are performed through communication subsystem **511.** Microprocessor **538** also interacts with further device subsystems such as the display **522,** flash memory **524,** random access memory (RAM) **526,** auxiliary input/output (I/O) subsystems **528,** serial port **530,** one or more keyboards or keypads **532,** speaker **534,** microphone **536,** other communication subsystem **540** such as a short-range communications subsystem and any other device subsystems generally designated as **542.** Serial port **530** could include a USB port or other port known to those in the art.

Some of the subsystems shown in **Figure 5** perform communication-related functions, whereas other subsystems may provide "resident" or on-device functions. Notably, some subsystems, such as keyboard **532** and display **522,** for example, may be used for both communication-related functions, such as entering a text message for transmission over a communication network, and device-resident functions such as a calculator or task list.

Operating system software used by the microprocessor **538** is preferably stored in a persistent store such as flash memory **524,** which may instead be a read-only memory (ROM) or similar storage element (not shown). Those skilled in the art will appreciate that the operating system, specific device applications, or parts thereof, may be temporarily loaded into a volatile memory such as RAM **526.** Received communication signals may also be stored in RAM **526.**

As shown, flash memory **524** can be segregated into different areas for both computer programs **558** and program data storage **550, 552, 554** and **556.** These different storage types indicate that each program can allocate a portion of flash memory **524** for their own data storage requirements. Microprocessor **538,** in addition to its operating system functions, preferably enables execution of software applications on the mobile device. A predetermined set of applications that control basic operations, including at least data and voice communication applications for example, will normally be installed on mobile device **500** during manufacturing. Other applications could be installed subsequently or dynamically.

A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **519.** In a preferred embodiment, the PIM data items are seamlessly integrated, synchronized and updated, via the wireless network **519,** with the mobile device user's corresponding data items stored or associated with a host computer system. Further applications may also be loaded onto the mobile device **500** through the network **519,** an auxiliary I/O subsystem **528,** serial port **530,** short-range communications subsystem **540** or any other suitable subsystem **542,** and installed by a user in the RAM **526** or preferably a non-volatile store (not shown) for execution by the microprocessor **538.** Such flexibility in application installation increases the functionality of the device and may provide enhanced on-device functions, communication-related functions, or both. For example, secure communication applications may enable electronic commerce functions and other such financial transactions to be performed using the mobile device **500.**

In a data communication mode, a received signal such as a text message or web page download will be processed by the communication subsystem **511** and input to the microprocessor **538,** which preferably further processes the received signal for output to the display **522,** or alternatively to an auxiliary I/O device **528.**

A user of mobile device **500** may also compose data items such as email messages for example, using the keyboard **532,** which is preferably a complete alphanumeric keyboard or telephone-type keypad, in conjunction with the display **522** and possibly an auxiliary I/O device **528.** Such composed items may then be transmitted over a communication network through the communication subsystem **511.**

For voice communications, overall operation of mobile device **500** is similar, except that received signals would preferably be output to a speaker **534** and signals for transmission would be generated by a microphone **536.**
Alternative voice or audio I/O subsystems, such as a voice message recording subsystem, may also be implemented on mobile device **500.** Although voice or audio signal output is preferably accomplished primarily through the speaker **534,** display **522** may also be used to provide an indication of the identity of a calling party, the duration of a voice call, or other voice call related information for example.

Serial port **530** in **Figure 5****,** would normally be implemented in a personal digital assistant (PDA)-type mobile device for which synchronization with a user's desktop computer (not shown) may be desirable, but is an optional device component. Such a port **530** would enable a user to set preferences through an external device or software application and would extend the capabilities of mobile device **500** by providing for information or software downloads to mobile device **500** other than through a wireless communication network. The alternate download path may for example be used to load an encryption key onto the device through a direct and thus reliable and trusted connection to thereby enable secure device communication. As will be appreciated by those skilled in the art, serial port **530** can further be used to connect the mobile device to a computer to act as a modem.

Other communications subsystems **540,** such as a short-range communications subsystem, is a further optional component which may provide for communication between mobile device **500** and different systems or devices, which need not necessarily be similar devices. For example, the subsystem **540** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use examples having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein. The invention is defined by the scope of appended claims 1-14.

## Claims

1. A method for automatic frequency control in a receiver of a wireless device, said receiver comprising a down converter (120) and a voltage controlled oscillator (170) and receiving a signal over a transmission channel, said method comprising:
determining a channel estimate for said transmission channel to derive a frequency offset of said received signal (Step 410);
calculating a signal to noise ratio based on the determined channel estimate (Step 420);
said method being **characterized by**:
determining a weighting function based on the calculated signal to noise ratio;
applying said weighting function to said channel estimate to create a weighted channel estimate (Step 430);
deriving a weighted frequency offset based on said weighted channel estimate;
converting said weighted frequency offset from Hertz to Volts;
supplying the converted weighted frequency offset to said voltage controlled oscillator (Step 440)and providing the output signal of said voltage controlled oscillator to an input of said down converter.

2. The method of claim 1, wherein the weighting function is determined based on a predetermined minimum signal to noise ratio.

3. The method of claim 2, wherein the weighting function is zero if the signal to noise ratio is less than the predetermined minimum signal to noise ratio (Steps 310/315).

4. The method of claim 2 or claim 3, wherein the weighting function is further determined based on a predetermined maximum signal to noise ratio, the maximum signal to noise ratio being a predetermined offset value above the minimum signal to noise ratio (Step 320).

5. The method of claim 4, wherein the weighting function is one if the signal to noise ratio is greater than the maximum signal to noise ratio (Step 325).

6. The method of claim 4 or claim 5, wherein the weighting function is a linearly varied value if the signal to noise ratio is between the predetermined minimum signal to noise ratio and the maximum signal to noise ratio (Step 330).

7. The method of claim 6, wherein the linearly varied value of the weighting function equals the minimum signal to noise ratio subtracted from the signal to noise ratio, the value of which is further divided by the difference between the maximum signal to noise ratio and the minimum signal to noise ratio.

8. A communications subsystem (511) in a mobile device (500), the communication subsystem (511) comprising a down converter (120) and a voltage controlled oscillator (170) and configured to receive a signal over a transmission channel, the communication subsystem further comprising:
a channel estimate block (130), the channel estimate block operably providing a channel estimate for said transmission channel to derive a frequency offset of said received signal;
a weighting function block (230) configured to determine a weighting function based on a signal to noise ratio determined from the channel estimate, the weighting function block being applied to said channel estimate to create a weighted channel estimate and to derive a weighted frequency offset based on said weighted channel estimate;
a converter block (160) to convert the weighted frequency offset to volts; and
a voltage controlled oscillator (170) receiving the converted weighted channel frequency offset and providing an input to the down converter.

9. The communications subsystem of claim 8, wherein the weighting function is determined based on a predetermined minimum signal to noise ratio.

10. The communications subsystem of claim 9, wherein the weighting function is zero if the signal to noise ratio is less than the predetermined minimum signal to noise ratio.

11. The communications subsystem of claim 9 or claim 10, wherein the weighting function is further determined based on a maximum signal to noise ratio, the maximum signal to noise ratio being a predetermined offset value above the minimum signal to noise ratio.

12. The communications subsystem of claim 11, wherein the weighting function is one if the signal to noise ratio is greater than the maximum signal to noise ratio.

13. The communications subsystem of claim 11 or claim 12, wherein the weighting function is a linearly varied value if the signal to noise ratio is between the predetermined minimum signal to noise ratio and the maximum signal to noise ratio.

14. The communications subsystem of claim 13, wherein the linearly varied value of the weighting function equals the minimum signal to noise ratio subtracted from the signal to noise ratio, the value of which is further divided by the difference between the maximum signal to noise ratio and the minimum signal to noise ratio.

## Patentansprüche

1. Ein Verfahren zur automatischen Frequenzsteuerung in einem Empfänger einer drahtlosen Vorrichtung, wobei der Empfänger einen Abwärtswandler (120) und einen spannungsgesteuerten Oszillator (170) aufweist und ein Signal über einen Übertragungskanal empfängt, wobei das Verfahren aufweist:
Bestimmen einer Kanalschätzung für den Übertragungskanal zum Ableiten eines Frequenz-Offsets des empfangenen Signals (Schritt 410);
Berechnen eines Signal-zu-Rausch-Verhältnisses basierend auf der bestimmten Kanalschätzung (Schritt 420);
wobei das Verfahren **gekennzeichnet ist durch**:
Bestimmen einer Gewichtungsfunktion basierend auf dem berechneten Signal-zu-Rausch-Verhältnis;
Anwenden der Gewichtungsfunktion auf die Kanalschätzung, um eine gewichtete Kanalschätzung zu erzeugen (Schritt 430);
Ableiten eines gewichteten Frequenz-Offsets basierend auf der gewichteten Kanalschätzung;
Umwandeln des gewichteten Frequenz-Offsets von Hertz zu Volt;
Liefern des umgewandelten gewichteten Frequenz-Offsets an den spannungsgesteuerten Oszillator (Schritt 440) und Vorsehen des Ausgabesignals des spannungsgesteuerten Oszillators an einen Eingang des Abwärtswandlers.

2. Das Verfahren gemäß Anspruch 1, wobei die Gewichtungsfunktion basierend auf einem vorgegebenen Minimum-Signal-zu-Rausch-Verhältnis bestimmt wird.

3. Das Verfahren gemäß Anspruch 2, wobei die Gewichtungsfunktion null ist, wenn das Signal-zu-Rausch-Verhältnis geringer ist als das vorgegebene Minimum-Signal-zu-Rausch-Verhältnis (Schritte 310/315).

4. Das Verfahren gemäß Anspruch 2 oder Anspruch 3, wobei die Gewichtungsfunktion weiter basierend auf einem vorgegebenen Maximum-Signal-zu-Rausch-Verhältnis bestimmt wird, wobei das Maximum-Signal-zu-Rausch-Verhältnis ein vorgegebener Offset-Wert über dem Minimum-Signal-zu-Rausch-Verhältnis ist (Schritt 320).

5. Das Verfahren gemäß Anspruch 4, wobei die Gewichtungsfunktion eins ist, wenn das Signal-zu-Rausch-Verhältnis größer ist als das Maximum-Signal-zu-Rausch-Verhältnis (Schritt 325).

6. Das Verfahren gemäß Anspruch 4 oder Anspruch 5, wobei die Gewichtungsfunktion ein linear variierter Wert ist, wenn das Signal-zu-Rausch-Verhältnis zwischen dem vorgegebenen Minimum-Signal-zu-Rausch-Verhältnis und dem Maximum-Signal-zu-Rausch-Verhältnis ist (Schritt 330).

7. Das Verfahren gemäß Anspruch 6, wobei der linear variierte Wert der Gewichtungsfunktion gleich dem Minimum-Signal-zu-Rausch-Verhältnis subtrahiert von dem Signal-zu-Rausch-Verhältnis ist, dessen Wert weiter durch die Differenz zwischen dem Maximum-Signal-zu-Rausch-Verhältnis und dem Minimum-Signal-zu-Rausch-Verhältnis geteilt wird.

8. Ein Kommunikationsteilsystem (511) in einer mobilen Vorrichtung (500), wobei das Kommunikationsteilsystem (511) einen Abwärtswandler (120) und einen spannungsgesteuerten Oszillator (170) aufweist und konfiguriert ist zum Empfangen eines Signals über einen Übertragungskanal, wobei das Kommunikationsteilsystem weiter aufweist:
einen Kanalschätzblock (130), wobei der Kanalschätzungsblock betriebsfähig eine Kanalschätzung für den Übertragungskanal vorsieht zum Ableiten eines Frequenz-Offsets des empfangenen Signals;
einen Gewichtungsfunktionsblock (230), der konfiguriert ist zum Bestimmen einer Gewichtungsfunktion basierend auf einem Signal-zu-Rausch-Verhältnis, das aus der Kanalschätzung bestimmt wird, wobei der Gewichtungsfunktionsblock auf die Kanalschätzung angewendet wird, um eine gewichtete Kanalschätzung zu erzeugen, und einen gewichteten Frequenz-Offset basierend auf der gewichteten Kanalschätzung abzuleiten;
einen Konverterblock (160) zum Umwandeln des gewichteten Frequenz-Offsets in Volt; und
einen spannungsgesteuerten Oszillator (170) zum Empfangen des umgewandelten gewichteten Kanal-Frequenz-Offsets und Vorsehen einer Eingabe an den Abwärtswandler.

9. Das Kommunikationsteilsystem gemäß Anspruch 8, wobei die Gewichtungsfunktion basierend auf einem vorgegebenen Minimum-Signal-zu-Rausch-Verhältnis bestimmt wird.

10. Das Kommunikationsteilsystem gemäß Anspruch 9, wobei die Gewichtungsfunktion null ist, wenn das Signal-zu-Rausch-Verhältnis geringer ist als das vorgegebene Minimum-Signal-zu-Rausch-Verhältnis.

11. Das Kommunikationsteilsystem gemäß Anspruch 9 oder Anspruch 10, wobei die Gewichtungsfunktion weiter basierend auf einem Maximum-Signal-zu-Rausch-Verhältnis bestimmt wird, wobei das Maximum-Signal-zu-Rausch-Verhältnis ein vorgegebener Offset-Wert über dem Minimum-Signal-zu-Rausch-Verhältnis ist.

12. Das Kommunikationsteilsystem gemäß Anspruch 11, wobei die Gewichtungsfunktion eins ist, wenn das Signal-zu-Rausch-Verhältnis größer ist als das Maximum-Signal-zu-Rausch-Verhältnis.

13. Das Kommunikationsteilsystem gemäß Anspruch 11 oder Anspruch 12, wobei die Gewichtungsfunktion ein linear variierter Wert ist, wenn das Signal-zu-Rausch-Verhältnis zwischen dem vorgegebenen Minimum-Signal-zu-Rausch-Verhältnis und dem Maximum-Signal-zu-Rausch-Verhältnis ist.

14. Das Kommunikationsteilsystem gemäß Anspruch 13, wobei der linear variierte Wert der Gewichtungsfunktion gleich dem Minimum-Signal-zu-Rausch-Verhältnis subtrahiert von dem Signal-zu-Rausch-Verhältnis ist, dessen Wert weiter durch die Differenz zwischen dem Maximum-Signal-zu-Rausch-Verhältnis und dem Minimum-Signal-zu-Rausch-Verhältnis geteilt wird.

## Revendications

1. Procédé de commande automatique de fréquence dans un récepteur d'un dispositif sans fil, ledit récepteur comprenant un convertisseur abaisseur (120) et un oscillateur commandé en tension (170) et recevant un signal sur un canal de transmission, ledit procédé comprenant le fait :
de déterminer une estimation de canal pour ledit canal de transmission pour dériver un décalage de fréquence dudit signal reçu (Étape 410) ;
de calculer un rapport signal sur bruit sur la base de l'estimation de canal déterminée (Étape 420) ;
ledit procédé étant **caractérisé par** le fait :
de déterminer une fonction de pondération sur la base du rapport signal sur bruit calculé ;
d'appliquer ladite fonction de pondération à ladite estimation de canal pour créer une estimation de canal pondérée (Étape 430) ;
de dériver un décalage de fréquence pondéré sur la base de ladite estimation de canal pondérée ;
de convertir ledit décalage de fréquence pondéré du Hertz au Volt ;
de fournir le décalage de fréquence pondéré converti audit oscillateur commandé en tension (Étape 440) et de fournir le signal de sortie dudit oscillateur commandé en tension à une entrée dudit convertisseur abaisseur.

2. Procédé de la revendication 1, dans lequel la fonction de pondération est déterminée sur la base d'un rapport signal sur bruit minimal prédéterminé.

3. Procédé de la revendication 2, dans lequel la fonction de pondération est nulle si le rapport signal sur bruit est inférieur au rapport signal sur bruit minimal prédéterminé (Étapes 310/315).

4. Procédé de la revendication 2 ou de la revendication 3, dans lequel la fonction de pondération est déterminée en outre sur la base d'un rapport signal sur bruit maximal prédéterminé, le rapport signal sur bruit maximal prédéterminé étant une valeur de décalage prédéterminée supérieure au rapport signal sur bruit minimal (Étape 320).

5. Procédé de la revendication 4, dans lequel la fonction de pondération est égale à un si le rapport signal sur bruit est supérieur au rapport signal sur bruit maximal (Étape 325).

6. Procédé de la revendication 4 ou de la revendication 5, dans lequel la fonction de pondération est une valeur linéairement variée si le rapport signal sur bruit est compris entre le rapport signal sur bruit minimal prédéterminé et le rapport signal sur bruit maximal (Étape 330).

7. Procédé de la revendication 6, dans lequel la valeur linéairement variée de la fonction de pondération est égale au rapport signal sur bruit minimal soustrait du rapport signal sur bruit, dont la valeur est divisée en outre par la différence entre le rapport signal sur bruit maximal et le rapport signal sur bruit minimal.

8. Sous-système de communication (511) dans un dispositif mobile (500), le sous-système de communication (511) comprenant un convertisseur abaisseur (120) et un oscillateur commandé en tension (170) et étant configuré pour recevoir un signal sur un canal de transmission, le sous-système de communication comprenant en outre :
un bloc d'estimation de canal (130), le bloc d'estimation de canal fournissant de manière fonctionnelle une estimation de canal pour ledit canal de transmission pour dériver un décalage de fréquence dudit signal reçu ;
un bloc de fonction de pondération (230) configuré pour déterminer une fonction de pondération sur la base d'un rapport signal sur bruit déterminé à partir de l'estimation de canal, le bloc de fonction de pondération étant appliqué à ladite estimation de canal pour créer une estimation de canal pondérée et pour dériver un décalage de fréquence pondéré sur la base de ladite estimation de canal pondérée ;
un bloc de convertisseur (160) pour convertir le décalage de fréquence pondéré en volt ; et
un oscillateur commandé en tension (170) recevant le décalage de fréquence de canal pondéré converti et fournissant une entrée au convertisseur abaisseur.

9. Sous-système de communication de la revendication 8, dans lequel la fonction de pondération est déterminée sur la base d'un rapport signal sur bruit minimal prédéterminé.

10. Sous-système de communication de la revendication 9, dans lequel la fonction de pondération est nulle si le rapport signal sur bruit est inférieur au rapport signal sur bruit minimal prédéterminé.

11. Sous-système de communication de la revendication 9 ou de la revendication 10, dans lequel la fonction de pondération est déterminée en outre sur la base d'un rapport signal sur bruit maximal, le rapport signal sur bruit maximal étant une valeur de décalage prédéterminée supérieure au rapport signal sur bruit minimal.

12. Sous-système de communication de la revendication 11, dans lequel la fonction de pondération est égale à un si le rapport signal sur bruit est supérieur au rapport signal sur bruit maximal.

13. Sous-système de communication de la revendication 11 ou de la revendication 12, dans lequel la fonction de pondération est une valeur linéairement variée si le rapport signal sur bruit est compris entre le rapport signal sur bruit minimal prédéterminé et le rapport signal sur bruit maximal.

14. Sous-système de communication de la revendication 13, dans lequel la valeur linéairement variée de la fonction de pondération est égale au rapport signal sur bruit minimal soustrait du rapport signal sur bruit, dont la valeur est divisée en outre par la différence entre le rapport signal sur bruit maximal et le rapport signal sur bruit minimal.
